(19) Europäisches Patentamt
European Patent Office
Office européen des brevets

(11) **EP 4 507 244 A1**

(12) **EUROPEAN PATENT APPLICATION**

(43) Date of publication:
**12.02.2025 Bulletin 2025/07**

(21) Application number: **23191118.1**

(22) Date of filing: **11.08.2023**

(51) International Patent Classification (IPC):
**H04L 7/00** $^{(2006.01)}$

(52) Cooperative Patent Classification (CPC):
**H04L 7/0029; H04L 7/0058**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Universiteit Gent**
**9000 Gent (BE)**

• **Imec VZW**
**3001 Leuven (BE)**

(72) Inventor: **VERBEKE, Marijn**
**9032 Wondelgem (BE)**

(74) Representative: **IP HILLS NV**
**Bellevue 5/501**
**9050 Gent-Ledeberg (BE)**

(54) **CLOCK AND DATA RECOVERY**

(57) Example embodiments describe a method and a circuitry to perform clock and data recovery, CDR. The method comprises the steps of obtaining an analogue communication signal characterized by a symbol frequency $F_{symbol}$; performing an analogue-to-digital conversion of the analogue communication signal according to a sampling rate $F_{sample}$ targeting $F_{symbol}*(M/L)$ thereby obtaining a digital signal; up-sampling the digital signal by L; filtering the up-sampled digital signal with filter coefficients of a finite impulse response, FIR, filter to perform a fractionally-spaced equalisation; down-sampling the filtered digital signal by M resulting in a recovered digital signal; obtaining intermediate filter coefficients for the FIR filter; determining a phase error based on the recovered digital signal; interpolating the intermediate filter coefficients based on the phase error to compensate for the phase error, resulting in interpolated filter coefficients; and updating the filter coefficients of the FIR filter with the interpolated filter coefficients.

Fig. 1

EP 4 507 244 A1

**Description**

**Technical Field**

Various example embodiments relate to clock and data recovery, CDR.

**Background**

Clock and data recovery, CDR, refers to techniques for retrieving data at a receiving end in serial data communication systems, e.g. in optical networks.

Serial communication signals usually contain a series of time-domain symbols transmitted at a certain symbol frequency, wherein each symbol represents one or more bits. The value of the one or more bits is usually represented by the amplitude of the symbol, e.g. as in Pulse Amplitude Modulation, PAM, or Non-Return to Zero, NRZ, signals.

In serial data communication, a transmitter constructs a signal targeting the symbol frequency or, in other words, the symbol rate or baud rate, which is typically determined according to a technology standard. The targeting is usually performed by use of a clock. The resulting signal, however, comprises deviations from the targeted symbol frequency, i.e. frequency error, as well as delays or phase deviations, i.e. phase error. These variations are caused by non-idealities of the transmitter, e.g. drifting, or, in other words frequency offset or wander, or clock jitter.

When a serial communication signal is transmitted over a medium, e.g. an optical fibre cable, distortion is introduced into the signal depending on the channel properties, e.g. bandwidth, resulting in inter-symbol interference, ISI. Therefore, CDR usually comprises channel equalisation, e.g. using a finite impulse response, FIR, filter, to remove ISI.

In theory, a receiver could sample the received signal at as low as the symbol frequency. However, this is only possible as long as the receiver can time the sampling to take place at the middle of a corresponding eye diagram, in order to capture a symbol at its most accurate value, i.e. with targeted sampling, as opposed to blind sampling. This can be done by recovering the sampling clock from the incoming serial signal. However, extracting a clock signal from the serial signal and feeding it back to perform the sampling introduces a costly loop delay resulting in smaller phase error tolerances and limited bandwidth.

Further, blind oversampling CDR techniques exist that apply data interpolation in order to allow data recovery at the middle of the corresponding eye diagram without having to feed back the recovered clock. This may be done by detecting the phase error and using it for the data interpolation. However, these schemes are not performant enough to deal with very high symbol rates and channel losses.

It is an object of the present invention to provide a CDR method that alleviates one or more of the above discussed limitations.

**Summary**

This object is achieved, according to a first example aspect, by a method for performing clock and data recovery, CDR. The method comprises the steps of obtaining an analogue communication signal characterized by a symbol frequency $F_{symbol}$; performing an analogue-to-digital conversion of the analogue communication signal according to a sampling rate $F_{sample}$ targeting $F_{symbol}*(M/L)$, thereby obtaining a digital signal, wherein M and L are natural numbers larger than zero; up-sampling the digital signal by L; filtering the up-sampled digital signal with filter coefficients of a finite impulse response, FIR, filter to perform a fractionally-spaced equalisation; down-sampling the filtered digital signal by M resulting in a recovered digital signal; obtaining intermediate filter coefficients for the FIR filter; determining a phase error based on the recovered digital signal; interpolating the intermediate filter coefficients based on the phase error to compensate for the phase error, resulting in interpolated filter coefficients; and updating the filter coefficients of the FIR filter with the interpolated filter coefficients.

The symbol frequency $F_{symbol}$ may be predetermined, e.g. according to an industry standard in serial data communication. An analogue communication signal may have been constructed at a transmitting end targeting the symbol frequency $F_{symbol}$, for example using a clock generator circuitry, and sent over a communication medium towards the receiving end, where the CDR is performed. The oversampling factor M/L represents an oversampling rate or, in other words, an oversampling fraction, and may be any number greater than one, e.g. 1.1 or 2. As M/L is defined as a fraction, fractional sampling may be applied. For example, if M equals 3 and L equals 2, a 1.5 times oversampling is applied. Any other oversampling rates are possible with M and L natural numbers larger than zero.

The filtering performs an equalisation to compensate for channel properties and thereby reduces inter-symbol interference, ISI. In combination with the up-sampling and the down-sampling, the filtering performs a fractionally-spaced equalisation or fractionally spaced equalisation, sometimes also referred to as fractionally-sampled equalisation or fractionally sampled equalisation. Thus, the filtering in combination with the up-sampling and the down-sampling results in the recovered digital signal characterized by a frequency close to the transmitted symbol frequency $F_{symbol}$, ruling out the effect of the oversampling by M/L. Considering non-idealities in the system, e.g. jitter, drifting, channel properties..., a frequency spectrum of the recovered digital signal may not perfectly match the targeted symbol frequency $F_{symbol}$. By phase error, or, in other words, phase shift or phase delay, is meant the time delay of clock edges of symbols of the recovered digital signal, i.e. clock edges of a corresponding virtually or implicitly constructed recovered clock at (L/M) $*F_{Sample}$, with respect to clock edges of an ideal clock at $F_{symbol}$ at the transmitting end. The phase error includes the time discrepancies of the recovered digital signal as compared to a perfectly periodic signal, i.e. without variations in period length. The phase error may comprise positive and/or negative time delays. This means that incoming samples may respectively be taken after or before an ideal clocking moment, e.g. the centre of a corresponding eye diagram. Providing the phase error for the interpolating of the intermediate filter coefficients introduces feedback in the method. As such, a loop path, i.e. a phase error loop, is followed during execution of the method. The phase error loop comprises the feeding back of the phase error, after calculation thereof based on the recovered digital signal, to the interpolation of the intermediate filter coefficients, wherein the interpolated filter coefficients are used to filter the up-sampled digital signal resulting in the recovered digital signal.

This approach allows an oversampling factor close to 1. When sampling at the symbol frequency, i.e. an oversampling factor of exactly 1, very precise moments of sampling need to be determined in order to preserve symbol information within the signal. This is not always possible due to non-ideal effects that occur in serial data communication. The redundancy introduced by oversampling can be exploited to compensate for these issues and perform an effective CDR. On the other hand, the sampling rate $F_{sample}$ of the analogue-to-digital conversion is a limiting factor due to its implications on necessary computational power. By allowing sampling close to the symbol frequency, a less power-hungry implementation can be provided. Performing an interpolation of filter coefficients based on the phase error has the same effect as performing data interpolation, i.e. compensating for the phase error. However, the filter coefficients are much more stable during the filtering process than the incoming up-sampled digital signal. The filter coefficients do not fluctuate as the digital signal does. By interpolating intermediate filter coefficients instead of the digital signal, higher symbol rates and channel losses can be dealt with and less computational power is required for the interpolating, due to the steadiness of the intermediate filter coefficients. Because the intermediate filter coefficients vary slowly, each update only requires a small correction, hence requires low computational power and can be performed relatively quickly. Additionally, by only feeding back the phase error to the interpolating step, a relatively small loop delay occurs when applying the method. This enables the scheme to tolerate relatively large phase errors, providing for a robust CDR method.

The obtaining of the intermediate filter coefficients may comprise calculating the intermediate filter coefficients according to an adaptive filter algorithm based on the digital signal and the recovered digital signal.

The adaptive filter algorithm may, for example, be a least mean squares, LMS, algorithm. By introducing a calculating step for obtaining intermediate filter coefficients, a second loop path, i.e. an adaptive filtering loop, is added to the method, additional to the phase error loop mentioned above. Whereas the phase error loop feeds back the phase error to the interpolation of the intermediate filter coefficients, the adaptive filtering loop comprises taking the digital signal and the recovered digital signal to calculate intermediate filter coefficients that are interpolated and then used for the filtering obtaining the recovered digital signal. The first loop path and the second loop path are linked in the interpolating step, where the interpolating of the intermediate filter coefficients, provided by the second loop path, is determined by the phase error, provided by the first loop path.

By applying an adaptive filter algorithm to the filter coefficients, the ISI may be reduced. Additionally, by interconnecting the phase error loop, focused on compensating delay errors, with the adaptive filtering loop, focused on reducing ISI, in the interpolating step, a better performance can be achieved by the CDR method. In addition, the feeding back of the phase error and the updating of the intermediate filter coefficients based on the adaptive filter algorithm, are not hindered by one another. The high tolerance for phase delays provided by the short phase error loop delay remains unaffected by the introduction of the adaptive filter loop. When the method is performed iteratively while an analogue communication signal is being received, the phase error loop will push the sampling time towards a desired sampling position, e.g. the middle of a symbol. During such an iterative implementation, the adaptive filtering loop will improve the signal quality of the recovered digital signal, e.g. a corresponding eye diagram will have a more open eye after a number of iterations. As the sampling position improves, the ISI removal performed by the adaptive filtering loop will converge faster. Analogously, as the signal quality is improved by the adaptive filtering, finding the ideal sampling position via the phase error loop becomes easier. Thus, the interaction of the phase error loop and the adaptive filtering loop has a synergetic effect, causing the CDR method to achieve a high performance.

The intermediate filter coefficients may characterize an underlying filter impulse response, and the interpolating may comprise shifting of the underlying filter impulse response based on the phase error.

As known in the art, a FIR filter's coefficients represent a filter impulse response in the time domain. The filter impulse response is accompanied by an underlying continuous time domain filter impulse response, interpolating the filter coefficients, i.e. the underlying filter impulse response results from a discrete-to-continuous transformation of the filter coefficients, e.g. a curve fitted through the filter coefficients.

The underlying filter impulse response is much smoother than the analogue communication signal and the digital signal. This allows the interpolating to be much more accurate compared to an interpolating of the digital signal. Further, determining the interpolation such that the underlying filter impulse response is being shifted according to the phase error, enables compensating for the phase error when the filter coefficients of the FIR filter are being updated with the interpolated filter coefficients. The compensation of the phase error allows a lower oversampling rate while preserving performance, resulting in less required computational power.

The method may further comprise shifting the intermediate filter coefficients when the phase error is at least half of an equivalent time between the intermediate filter coefficients in absolute value, to further compensate for the phase error.

FIR filtering may be understood as applying a linear combination of incoming digital signal samples, using filter coefficients as weights. The filter coefficients are then assigned an index number, e.g. from 0 to N-1 with N being the number of filter coefficients. As the filter coefficients are applied to a digital signal in the time-domain, the filter coefficients are spaced as far apart in time as the digital signal samples or periods. The equivalent time refers to a spacing between two filter coefficients of subsequent index numbers, corresponding to a time spacing between two incoming digital signal samples being filtered. According to the method, the equivalent time may be defined as the symbol period $T_{symbol}$ divided by the down-sampling factor M.

By shifting the intermediate filter coefficients, the remaining phase error that needs to be further compensated for by interpolating is guaranteed to be small, namely smaller in absolute value than half of the equivalent time. Therefore, less computational power is required. Firstly, when interpolation is being performed, extrapolation may be required of the first or last filter coefficient, as they border the filter coefficients. With respect to accuracy, extrapolation needs to be avoided as much as possible. Shifting the intermediate filter coefficients reduces the necessary interpolation and thus limits the range of extrapolation. Additionally, accuracy is preserved better, since during the shifting of the intermediate filter coefficients no quantisation or rounding errors occur.

Further, the FIR filter may be a polyphase FIR filter with L phases.

The up-sampling, the filtering and the down-sampling to perform the fractionally-spaced equalisation may be executed using a polyphase filter with L phases.

By making use of a polyphase filter, the up-sampling and the down-sampling are incorporated in the filtering step. In the approach with separate up-sampling and down-sampling respectively before and after filtering, not all calculated filtered digital signal samples are further used due to the following down-sampling step. Applying polyphase filtering with L phases avoids calculating these discarded samples and thus results in a less computationally intensive implementation. Further, because each polyphase component performs a filtering using filter coefficients that are not used by the other polyphase components, they can be applied in parallel and computation time may be further reduced. Additionally, the polyphase FIR filter is capable of more efficiently implementing interpolating which comprises shifting the intermediate filter coefficients.

The method may further comprise equalising the recovered digital signal according to an additional equalisation scheme.

Because the phase error loop delay determines the phase error tolerance of the method, the number of filter coefficients may be chosen to be a small number, e.g. 8 or 12. However, this may limit the ISI removal capabilities of the method. Therefore, applying an additional equalisation scheme outside of the phase error loop, may further improve the ISI removal without restricting the high tolerance for phase errors.

The determining of the phase error may comprise applying a low-pass filtering operation on the phase error.

By performing a low-pass filtering on the phase error, the phase error signal becomes smoothed out in the time domain as high frequencies are removed from the phase error signal.

Applying a low-pass filtering increases the stability of the method when further processing the phase error, e.g. when the method is performed by a circuitry.

Further, the method may comprise calculating a frequency correction based on the phase error and applying the frequency correction to the sampling rate $F_{sample}$ thereby compensating for frequency deviations from the symbol frequency $F_{symbol}$.

Non-ideal effects occur in serial data communication that cause timing errors, such as drifting. Drifting or wandering means that there are not only variating time delays during every symbol period, but that a frequency offset from the symbol frequency $F_{symbol}$ occurs.

By feeding back information to the analogue-to-digital conversion step, the method introduces a loop delay larger than the relatively small loop delay, of the phase error loop discussed above. However, the frequency correction can be applied intermittently, i.e. at a much lower rate than the symbol frequency $F_{symbol}$, e.g. at a 100 times lower rate than the symbol frequency $F_{symbol}$. As such, the robustness introduced by the small loop delay of the phase error is fully preserved. In addition, calculating the frequency correction only requires low computational power. By applying the frequency correction, the phase error can be kept smaller as the sampling rate $F_{sample}$ is already being partially synchronized with the actual symbol frequency comprised by the analogue communication signal. Keeping the phase error smaller even further increases the tolerance of the method to phase errors and further improves its applicability for high data rates and data channels with high losses.

The method may further comprise, before the up-sampling, demultiplexing the digital signal as N parallel digital signals, and performing subsequent steps in parallel.

Parallelizing by N permits calculations to be performed during an N times longer time window as without parallelization, while still keeping up with the speed of the incoming digital signal. This allows more complex operations to be computed and therefore allows more powerful processing of the digital signal. Also, analogue communication signals with higher symbol rates can be processed. Further, by splitting the to be processed digital signal into N parallel data streams, the further steps of the method can be performed at an N times lower rate as an analogue communication signal is being received. This significantly reduces the computational intensiveness of the method. When the method is, for example, performed by a circuitry, this translates to an N times lower operating frequency of the circuitry. N may, for example, equal 100.

The method may further comprise buffering the digital signal through an elastic buffering scheme, and the method may further comprise shifting the digital signal in the buffering scheme when the phase error exceeds a sampling period associated with the sampling rate $F_{sample}$, to further compensate for the phase error.

Elastic buffering is a way of buffering, e.g. FIFO or LIFO, between different yet similar frequency domains while managing under- and/or overflow caused by the difference in frequencies. As an analogue communication signal targeting the symbol frequency $F_{symbol}$ may not perfectly match the symbol frequency in serial data communication, elastic buffering is suited to safeguard data integrity. In addition, the buffering may be employed to even further improve the phase error compensation. This can be done by shifting the samples of the digital signal during buffering, according to the phase error.

After the analogue-to-digital conversion, the period of the digital signal targets $T_{symbol} * \dfrac{L}{M}$, i.e. the sampling period associated with the sampling rate $F_{sample}$. When the phase error is equal to the distance between two incoming digital signal samples, phase compensation may be performed by accordingly shifting the incoming digital samples, instead of adapting the intermediate filter coefficients by interpolation. For example, when the detected phase error equals $T_{symbol} * \dfrac{L}{M}$, the digital signal may be delayed by one sample by shifting the digital signal by one position in the buffering scheme. If the phase error comprises a multiple of K times the sampling period associated with the sampling rate $F_{sample}$, the digital samples may be shifted by K positions in the buffering scheme.

By shifting the digital signal in the buffering scheme, the remaining phase error that needs to be further compensated for by interpolating is guaranteed to be small, namely smaller than the sampling period associated with the sampling rate $F_{sample}$. Therefore, less computational power is required. Additionally, accuracy is preserved better, since during the shifting no quantisation or rounding errors occur. Further, considering performance, it is beneficial to preserve the filter coefficients of the FIR filter that have the largest absolute value when updating filter coefficients. This is because the filter coefficients with the largest values comprise the highest contribution to the filtering and they therefore contain the most information relevant for the filtering. An increasing delay within the analogue communication signal may cause the largest filter coefficient to be lost when interpolating, as it may be pushed out of the filter coefficients by the shifting. Therefore, the preserving can be aimed for by keeping a largest filter coefficient with a highest value at a central position of the filter coefficients, i.e. with a coefficient index located in the middle. When the interpolating further comprises shifting the digital signal in the buffering scheme, this contributes to keeping the largest filter coefficient centralized as it avoids shifting the filter coefficients themselves.

Advantageously, compensating for the phase error may comprise a combination of shifting of the underlying filter impulse response based on the phase error, shifting the intermediate filter coefficients when an absolute value of the phase error is at least half of an equivalent time between the intermediate filter coefficients, and shifting the digital signal in the buffering scheme when the phase error exceeds a sampling period associated with the sampling rate $F_{sample}$.

By combining these approaches of interpolating, the CDR becomes especially performant because the phase error is guaranteed to remain small by performing computationally efficient operations. The interpolated filter coefficients are only being explicitly calculated when the phase error is smaller in absolute value than half of an equivalent time between the intermediate filter coefficients. Further, in case the phase error keeps increasing significantly, this is compensated for via the buffering scheme.

The object of the invention is achieved, according to a second example aspect, by a circuitry for clock and data recovery, CDR, the circuitry comprising an analogue-to-digital converter, ADC, configured to perform an analogue-to-digital conversion of an analogue communication signal according to a sampling rate $F_{sample}$ targeting $F_{symbol}*(M/L)$ thereby obtaining a digital signal, wherein M and L are natural numbers larger than zero; an up-sampler, configured to up-sample the digital signal by L; a filter; configured to filter the up-sampled digital signal with filter coefficients of a finite impulse response, FIR, filter to perform a fractionally-spaced equalisation; a down-sampler, configured to down-sample the filtered digital signal by M resulting in a recovered digital signal; a sub-circuitry configured to obtain intermediate filter coefficients for the FIR filter; a phase error calculation circuitry configured to determine a phase error based on the recovered digital signal; and an interpolator configured to interpolate the intermediate filter coefficients based on the phase error to compensate for the phase error, resulting in interpolated filter coefficients, and configured to update the filter coefficients of the FIR filter with the interpolated filter coefficients.

**Brief Description of the Drawings**

Some example embodiments will now be described with reference to the accompanying drawings.

Fig. 1 shows an example embodiment of a circuitry for performing clock and data recovery, CDR;

Fig. 2 illustrates a phase error;

Fig. 3 illustrates an analogue-to-digital conversion in a CDR circuitry according to an example embodiment;

Fig. 4 illustrates an up-sampling in a CDR circuitry according to an example embodiment;

Fig. 5 illustrates a filtering and a down-sampling in a CDR circuitry according to an example embodiment;

Fig. 6 shows a plot representing intermediate filter coefficients;

Fig. 7 shows an example embodiment of interpolating intermediate filter coefficients;

Fig. 8 shows an example embodiment of shifting intermediate filter coefficients; and

Fig. 9 shows an example embodiment of a circuitry for performing clock and data recovery, CDR.

**Detailed Description**

Example embodiments relate to a circuitry and a method for performing CDR. Such a circuitry may, for example, be used in passive optical networks, PONs, and example embodiments will be further explained in the context of PONs, merely for illustrative purposes. In PONs, data is generally exchanged between a terminal and a collection of users units. In a downstream mode, data is sent continuously through the PON in the form of consecutive frames from the terminal to the collection of user units. Therein, user units only analyse those frames which are identified as intended for them. The identifying is done by examining a header of the frame. In an upstream mode, user units are coordinated to alternately send data bursts over the PON to the terminal, i.e. according to a time division multiple access, TDMA, scheme. The downstream mode and upstream mode alternate each other according to network requirements. The CDR circuitry can handle receiving analogue communication signals at the terminal as well as at the user units. The figures depict the functional parts of a circuitry according to example embodiments. When a circuitry component is described by its function, it may also be considered as performing a step of a method according to its use.

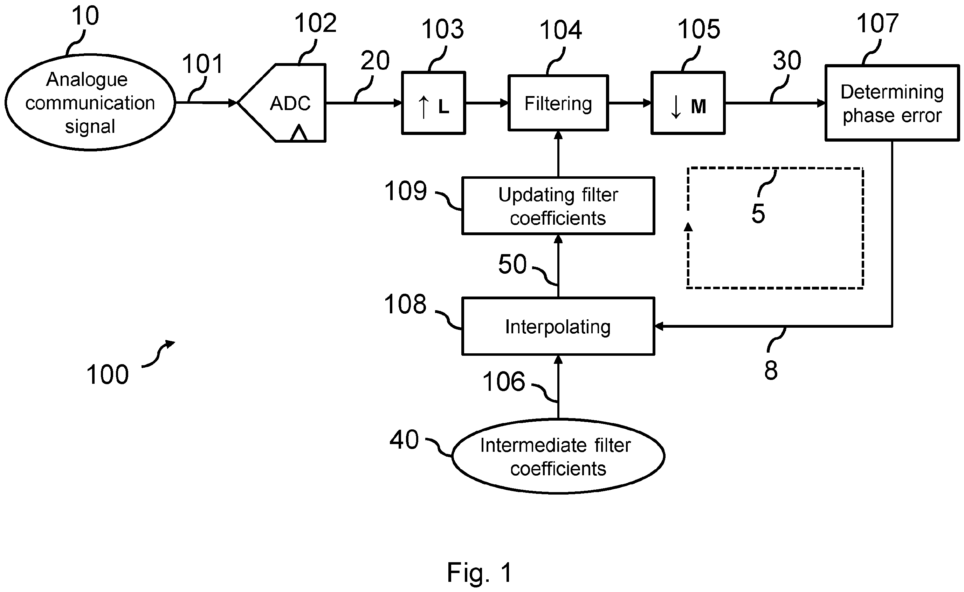

Fig. 1 shows an example embodiment of a circuitry (100) and corresponding method for performing clock and data recovery, CDR, at a receiving end. The method (100) comprises obtaining (101) an analogue communication signal (10) characterized by a symbol frequency $F_{symbol}$. An incoming analogue communication signal (10) has been created at a transmitting end targeting the symbol frequency. The symbol frequency is typically determined beforehand according to a technology standard such as the NG-EPON standard for a PON. The actual symbol frequency of the analogue communication signal (10) is usually generated by use of a clock circuitry that targets the symbol frequency. By targeting by use of a clock circuitry, the symbol frequency can be very closely approximated.

Next, the analogue communication signal (10) is converted to a digital signal (20) by an S-bit analogue-to-digital converter, ADC, with S, for example, equal to 8. The ADC transforms a continuous analogue signal to a discrete series of quantized values, i.e. $2^S$ digital values, thereby quantizing the analogue communication signal (10). The resolution of the ADC is limited by the high data rates in PONs. A clock at a frequency targeting $F_{symbol}*(M/L)$ is used for sampling during the analogue-to-digital conversion, wherein M/L represents an oversampling rate of the ADC. M/L is chosen to be larger than 1, but preferably smaller than 2 in order to limit the oversampling frequency and therewith associated power consumption. M/L may, for example, be chosen to be 4/3, with M equal to 4 and L equal to 3. These example parameter values of M=4 and L=3 will be used during the remainder of this detailed description for illustrative purposes, but other values may be selected. The analogue communication signal (10) is then sampled approximately every $(3/4)*T_{symbol}$ seconds. A suitable type of ADC for dealing with high PON data rates may e.g. be a time-interleaved successive approximation-register, TI-SAR, ADC.

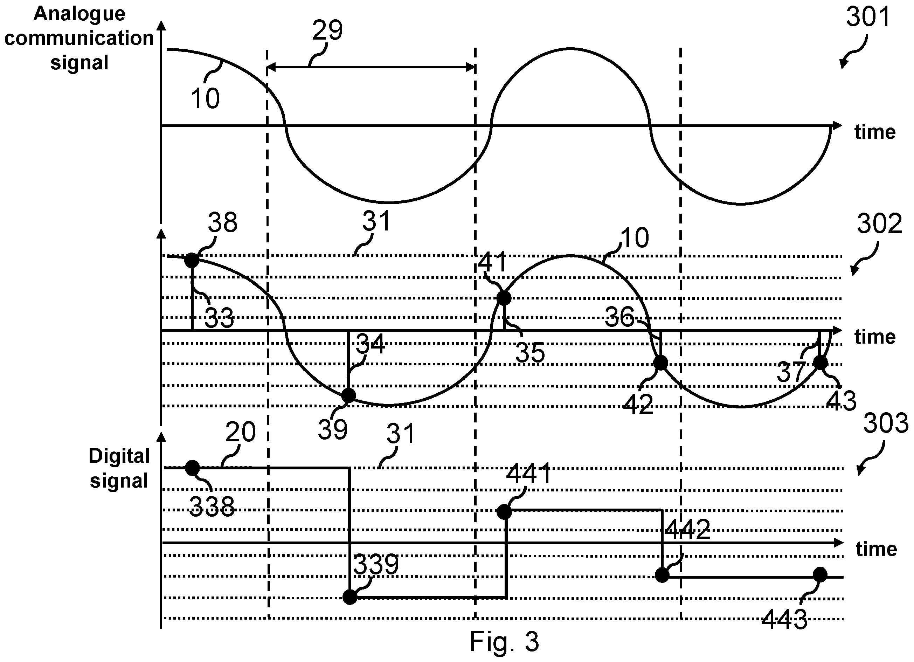

Fig. 3 illustrates an analogue-to-digital conversion of the analogue communication signal (10) resulting in the digital signal (20), wherein an oversampling factor of 4/3 is applied, and wherein the ADC is a 3-bit ADC. Fig. 3 shows a first subplot (301), showing the analogue communication signal (10) and showing the targeted symbol period $T_{symbol}$ (29). A second subplot (302) illustrates how the sampling is performed. At regular intervals of $(3/4)*T_{symbol}$ at times (33, 34, 35, 36, 37), corresponding samples (38, 39, 41, 42, 43) are taken. When a sample is taken, the value of the analogue communication signal (10) is quantised onto one of the levels (31) provided by the ADC. Because a 3-bit ADC is used in this example, there are $2^3$ or 8 such levels. The result of the quantisation, i.e. the digital signal (20) comprising quantized samples (338, 339, 441, 442, 443), is shown in subplot (303). Because of the oversampling, more than one sample is taken during a symbol period. As the sampling is performed blindly, samples are taken at various positions within the corresponding eye diagram. Blind sampling is understood as not being phase corrected such that the sampling does not target a centre of the eye diagram.

Returning to Fig. 1, after the analogue-to-digital conversion, the digital signal (20) is processed by a fractionally-spaced equaliser, resulting in a recovered digital signal (30). The fractionally-spaced equaliser comprises an up-sampler with oversampling factor 3, a FIR filter characterized by a number of filter coefficients, e.g. 8, and, a down-sampler with down-sampling factor 4. After the up-sampling (103) by 3 and the down-sampling (105) by 4, the recovered digital signal (30) is characterized by a frequency approximating $F_{symbol}$.

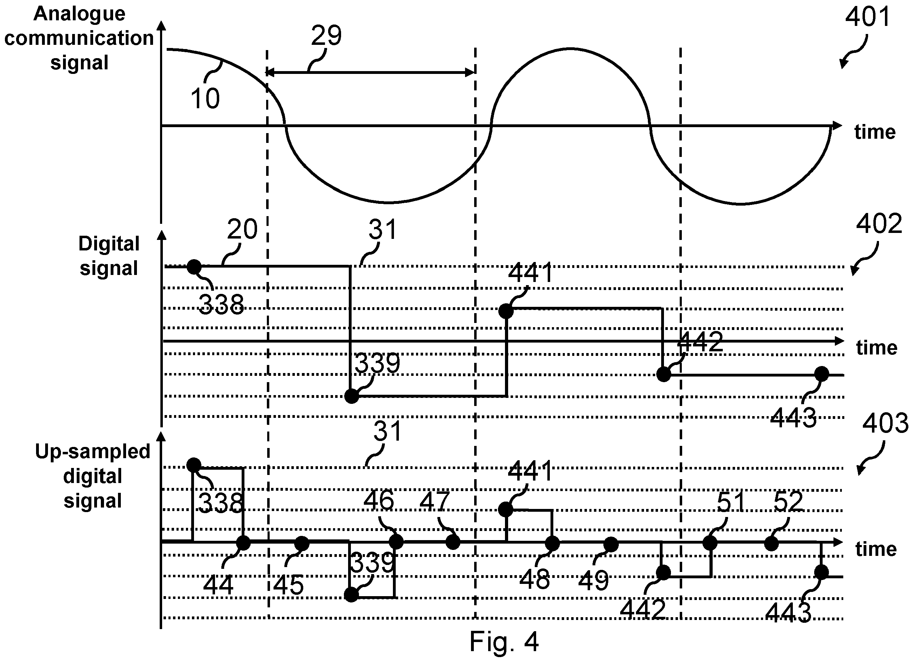

The up-sampling (103) by a factor 3 is illustrated in Fig. 4. As in Fig. 3, a first subplot (401) shows the analogue communication signal (10) along with the targeted symbol period (29). A second subplot (402) shows again the digital signal (20) constructed by the ADC. The up-sampled result is shown in a third subplot (403), wherein the sample period of the digital signal (20) is divided by 3, resulting in a new sample period. For every period of the digital signal (20), the value of the digital signal (20) is kept for a duration of the new sample period, whereafter two periods of zeros, i.e. samples (44, 45, 46, 47, 48, 49, 51, 52) with a value of zero, are introduced. As such, the frequency is multiplied with the factor 3 and zeros are introduced accordingly.

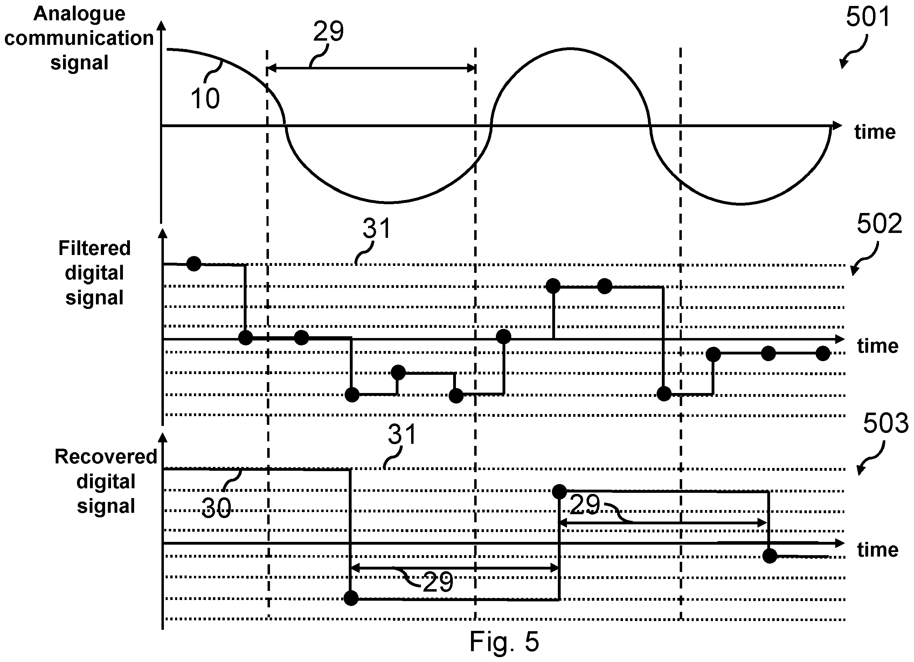

Fig. 5 illustrates the down-sampling (105) after filtering (104), which is executed on an up-sampled and filtered digital signal, shown in subplot (502). The filtered digital signal has only been represented illustratively and has the same period length as the up-sampled digital signal, yet with different values. Subplot (501) again shows the analogue communication signal (10) and the targeted symbol period (29). The recovered digital signal is illustrated in subplot (503). By down-sampling (105) by 4, values are kept for 4 periods, resulting in a reduction of the oversampling factor 4/3 and achieving a data rate at a frequency of approximately the symbol frequency. The sample duration of the recovered digital signal (30) again targets the symbol period (29).

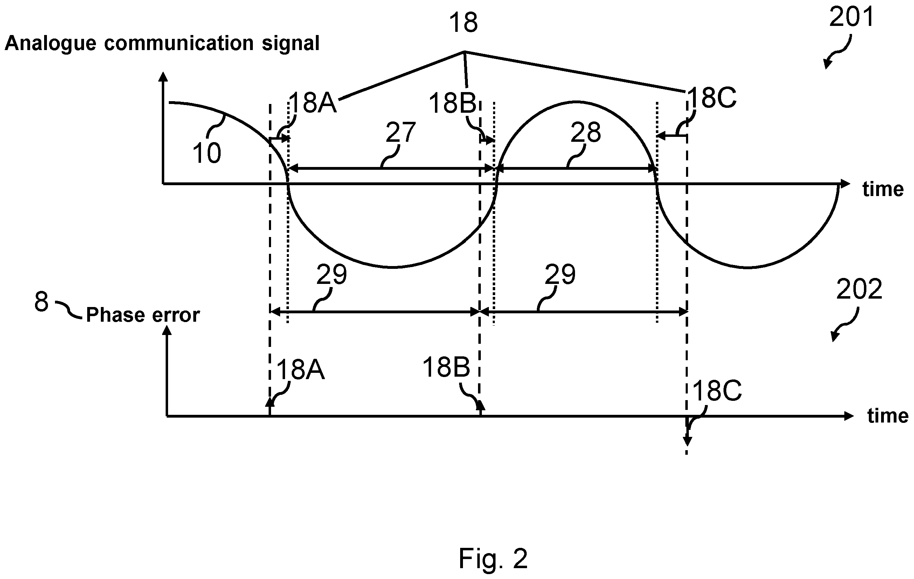

Turning to Fig. 2, an incoming analogue communication signal (10) comprises phase shifts, resulting in varying lengths or, in other words, varying time durations, of incoming symbols. In this example, the analogue communication signal (10) is a non-return to zero, NRZ, signal with consecutive symbols '1', '0', '1', '0'. Note that only half of the first symbol '1' is shown. The analogue communication signal (10) is shown as a simplified version of a realistic analogue communication signal (10). For example, the symbol shape may be different and/or distorted, or the signal may comprise a more complex signal, such as a PAM-4 signal. A symbol period (27, 28) of the analogue communication signal (10) is not constant and deviates from the predetermined, targeted symbol period $T_{symbol}$ (29). This is caused by non-idealities of the clock circuitry at the transmitting end, e.g. jitter and drift, as well as other non-idealities of the circuitry at the transmitting end and of the PON channel. As a result, symbols might arrive slightly later than expected according to $F_{symbol}$, i.e. with a positive time delay, e.g. time delay 18A or time delay 18B. Symbols may also arrive slightly earlier, i.e. with a negative time delay, e.g. time delay 18C. The phase error (8) may be defined as a collection (18) of time delay errors of the analogue communication signal (10), e.g. 18A, 18B and 18C.

Returning to Fig. 1, the circuitry (100) comprises a phase error calculation circuitry configured to determine (107) the phase error (8) based on the recovered digital signal (30). Contrary to explicit clock recovery or, in other words, active clock compensation techniques, the phase error (8) is not compensated for directly by adjusting the sampling moment. In such schemes, no blind sampling is applied, yet sampling is actively attempted to be performed in the middle of the corresponding eye diagram based on delay information. However, those approaches suffer from a costly loop delay by explicitly feeding back clock information. These delays are intolerable for applications operating at increasingly high speeds such as PONs. After the blind sampling is performed by the ADC, the digital signal (20) can take any of the quantisation level values (31) provided by the ADC, as shown in Fig. 3. Outputted by the fractionally-spaced equaliser, the recovered digital signal (30) can also take any of the quantisation level values (31) provided by the same ADC, see Fig. 5, or may comprise more quantization level values if provided by the circuitry (100). However, the analogue communication signal represents NRZ signals in this example, thus only with extreme values '0' and '1'. The recovered digital signal (30) has a higher resolution than the information contained within the analogue communication signal (10), e.g. a resolution of 1 bit for NRZ signals. This surplus of resolution can be exploited to determine (107) the phase error (8), because the value of the recovered digital signal (30) inherently carries information about the phase error (8). For example, phase error detection may be done using a baud-rate phase detector, e.g. a Mueller-Muller phase detector. Further, note that timing variations of the recovered digital signal (30) comprise an accumulation of a frequency error or frequency offset, resulting in a deviation from $F_{symbol}$, and a phase error (8), which may be different for each symbol within the recovered digital signal (30). Note that the frequency error may also be regarded as part of the phase error when the phase error is described with respect to an ideal clock at the symbol frequency $F_{symbol}$.

Further, the circuitry (100) comprises a sub-circuitry to obtain (106) intermediate filter coefficients (40) for the FIR filtering (104). According to example embodiments, the obtaining (106) of the intermediate filter coefficients (40) is done by reusing intermediate filter coefficients from a past iteration. This is particularly advantageous when the channel is expected to change relatively slowly, e.g. in downstream mode at the user units and in upstream within a data burst at the terminal. During a burst, the channel will generally not vary greatly as bursts occur during relatively short periods of time. According to further example embodiments, the obtaining (106) comprises preloading of previously calculated intermediate filter coefficients from another CDR process, e.g. applied on the same or a similar PON. This may be useful for initialization of the intermediate filter coefficients (40), e.g. when the CDR circuitry is initiated. Any combination of the abovementioned approaches for obtaining (106) of the intermediate filter coefficients (40) is also possible.

The circuitry (100) further comprises an interpolator, configured to interpolate (108) the intermediate filter coefficients (40) based on the phase error (8), resulting in interpolated filter coefficients (50). Providing the phase error (8) to the interpolator introduces feedback in the circuitry (100). As such, a phase error loop (5) is passed through during CDR, as indicated in Fig. 1. The phase error loop (5) comprises the feeding back of the phase error (8), after calculation thereof based on the recovered digital signal (30), to the interpolator, wherein interpolated filter coefficients (50) are used to filter (104) the up-sampled digital signal resulting in the recovered digital signal (30).

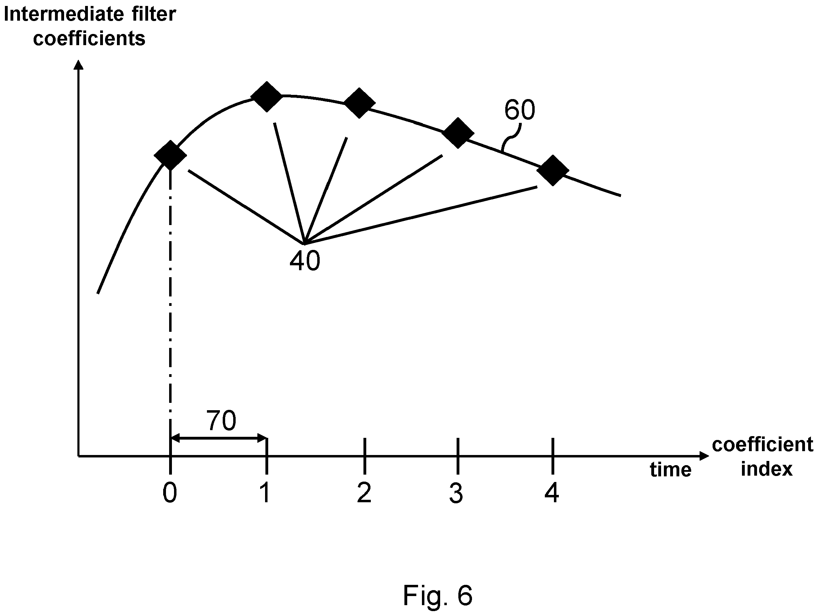

Referring to Fig. 6, the intermediate filter coefficients (40) may characterize an underlying filter impulse response (60). Each intermediate filter coefficient is assigned an index number or, in other words, a coefficient index, e.g. starting from 0 as illustrated in Fig. 6.

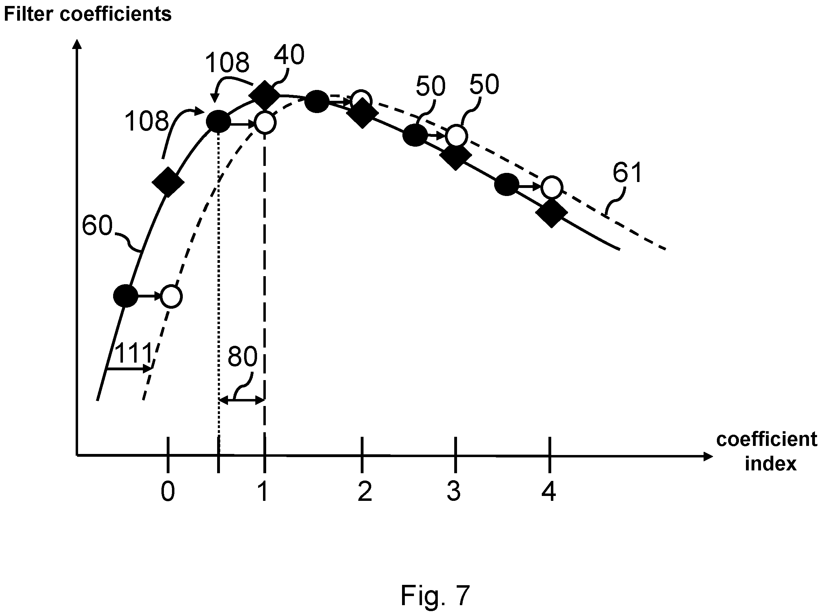

Referring to Fig. 7, the interpolating (108) may comprise shifting (111) of the underlying filter impulse response (60) in the time domain based on the phase error (8) by a certain delay or shift (80). In Fig. 7, the intermediate filter coefficients (40) are represented by filled diamond shapes. The interpolated filter coefficients (50) are represented by circle shapes. By interpolating (108), intermediate values on the underlying filter impulse response (60) are found. Taking these intermediate values as the new filter coefficients shifts the underlying filter impulse response (60) by a shift (80) to a new underlying filter impulse response (61), as illustrated in Fig. 7. This is done by assigning the coefficient indices to the interpolated filter coefficients (50). According to example embodiments, the interpolating (108) comprises shifting (111) of the underlying filter impulse response (60) by the phase error (8), i.e. the shift (80) equals the phase error (8). The shift (80) can be either positive or negative to compensate for a positive or negative phase error (8) respectively. Since the impulse response is shifted, extrapolation may be required of the first or last filter coefficient. For example, in Fig. 7, the first filter coefficient is found by extrapolation.

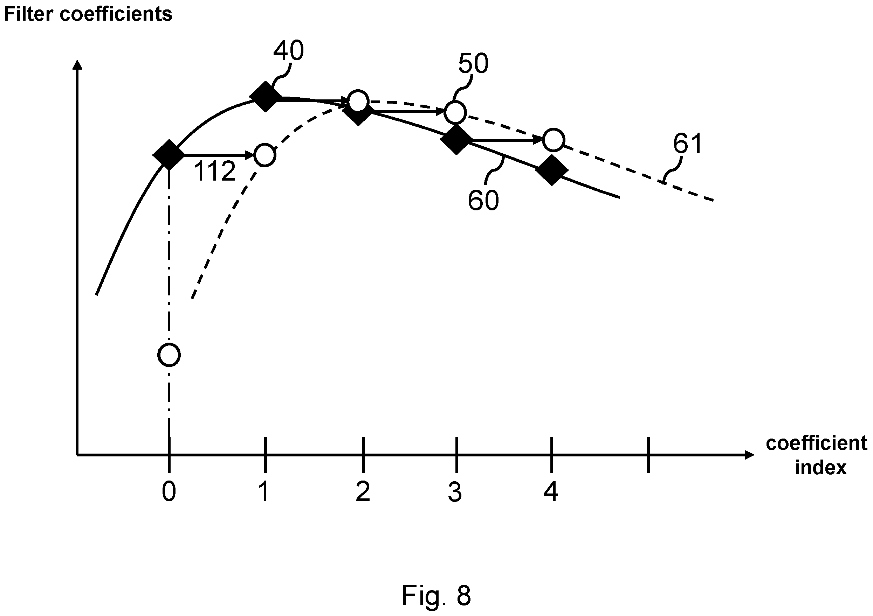

Referring to Fig. 8, alternatively or additionally, the method (100) may further comprise shifting (112) the intermediate filter coefficients (40) when the phase error (8) in absolute value is at least half of an equivalent time (70) between the intermediate filter coefficients (40). The interpolated filter coefficients (50) are again represented by circle shapes. Fig. 6 shows the equivalent time (70) as a distance, expressed in a time unit, between subsequent intermediate filter coefficients (40), i.e. between coefficient indices of the intermediate filter coefficients. In the circuitry (100), the filtering (104) is applied to the by the factor L up-sampled digital signal. The spacing between incoming samples, which in this case is the equivalent time, may be $T_{symbol}/M$, wherein $T_{symbol}$ is $1/F_{symbol}$ and M is the down-sampling factor. In Fig. 8, extrapolation is applied for calculating the interpolated filter coefficient having an index of 0.

Thus, to compensate for the phase error (8), the method may comprise a combination of shifting 112 the underlying filter impulse response and subsequently shifting 111 the underlying filter impulse response (60) to compensate for the phase error (8) remaining after the shifting 112. According to example embodiments, the shift 112 is equal to the equivalent time (70). The remaining phase error then comprises the phase error minus the equivalent time. By choosing half of the equivalent time in absolute value as threshold value for the shifting 112, the amount of interpolating performed by the absolute value of the shifting 111 is minimized to as far as half of an equivalent time, as such preserving as much information comprised within the filter coefficients as possible. Alternatively, the shift (112) can be equal to K times the equivalent time (70) when the phase error (8) in absolute value is at least (K minus a half) times the equivalent time (70), as illustrated in Fig. 8. In this case, the amount of interpolating performed by the shifting 111 is also minimized to as far as half of an equivalent time.

Returning to Fig. 1, the interpolator is configured to update (109) the filter coefficients of the FIR filter with the interpolated filter coefficients (50) to compensate for the phase error (8).

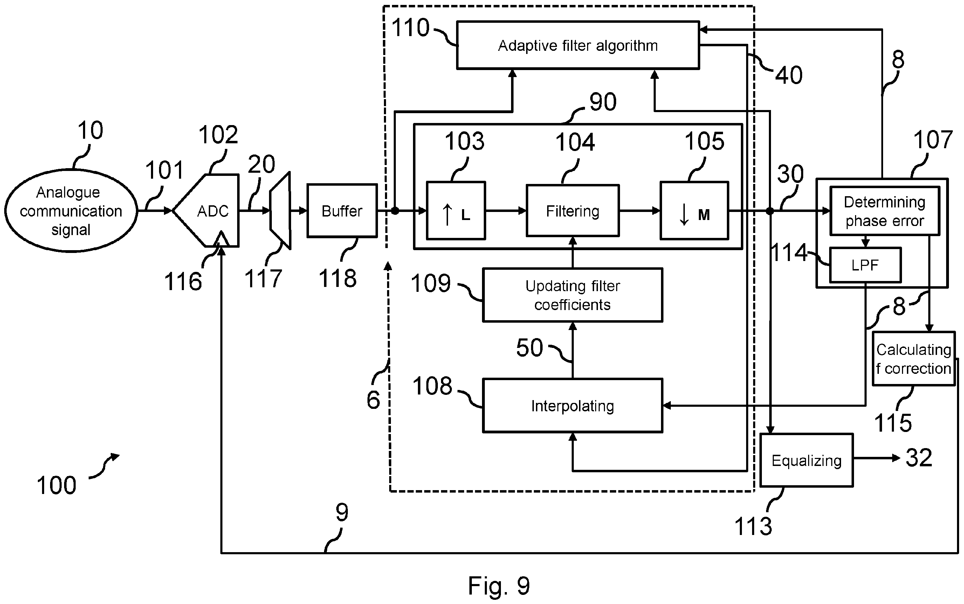

In Fig. 9, another example of a circuitry (100) according to the invention is shown. This example embodiment comprises the same components that were already shown in the example embodiment of Fig. 1. The same reference numerals were used to indicate the same parts of the circuitry (100) and steps of the corresponding method (100). Further, the example embodiment of Fig. 9 comprises features that are additional to those presented in the example embodiment of Fig. 1.

With reference to Fig. 9, the obtaining (106) of the intermediate filter coefficients (40) comprises calculating (110) the intermediate filter coefficients (40) according to an adaptive filter algorithm based on the input, i.e. digital signal (20), and the output, i.e. recovered digital signal (30), of the fractionally-spaced equalisation. Thereby, an adaptive filtering loop (6) is added to the method, additional to the phase error loop (5), not shown again in Fig. 9. The adaptive filtering loop (6) comprises taking the digital signal (20) and the recovered digital signal (30) to calculate intermediate filter coefficients (40) that are interpolated and then used for the filtering (104) obtaining the recovered digital signal (30). Optionally, previously calculated intermediate filter coefficients (40) may be re-used, to only recalculate the intermediate filter coefficients (40) according to the adaptive filter algorithm after several iterations, resulting in a lower power consumption and higher performance. Alternatively, the intermediate filter coefficients may be recalculated continuously at a beginning stage of a CDR process, e.g. at the beginning of the downstream mode or at the beginning of a burst, to adapt to the PON channel. After the beginning stage, the filter coefficients may sufficiently match the channel and recalculation of the intermediate filter coefficients (40) may only be required every several iterations. Skipping the update of the filter coefficients during certain iterations or periods becomes possible because the interpolation is performed on filter coefficients instead of data, as filter coefficients change much less over time than data. Further, a step of passing the phase error (8) to the adaptive filter (110), is additionally required when performing the adaptive filtering, the reason being as follows. The adaptive filter (110) uses the input (20) and output (30) to update the intermediate filter coefficients (40) that serve the purpose of removing ISI. However, the adaptive filtering is based on the interpolated filter coefficients (50) from a previous iteration, which are the previous intermediate filter coefficients (40) that have been subjected to the interpolating step (108) based on the phase error (8). In order to update the intermediate filter coefficients (40) correctly, an additional calculation step is thus necessary to compensate the interpolating, i.e. an inverse interpolation step. For that purpose, the adaptive filter (110) needs the phase error (8) for its correct operation.

Further, the FIR filter of the example embodiment shown in Fig. 9 is a polyphase FIR filter (90) with L phases to perform the fractionally-spaced equalisation including the up-sampling (103) and the down-sampling (104). An input-output relation between digital signal x(t) (20) and recovered digital signal y(t) (30) may be described as follows, wherein f(x) represents the FIR filtering (104):

$$y(k) = \sum_{r=-\infty}^{+\infty} f(kM - rL) * x(r)$$

Applying polyphase factorisation or decomposition by L results in the following filter banks:

$$y_0(k) = \sum_{r=-\infty}^{+\infty} f(L(kM - r)) * x(r) = \sum_{r=-\infty}^{+\infty} f_0(kM - r) * x(r)$$

$$y_1(k) = \sum_{r=-\infty}^{+\infty} f(L(kM - r) + M) * x(r) = \sum_{r=-\infty}^{+\infty} f_M(kM - r) * x(r)$$

$$\vdots$$

$$y_{L-1}(k) = \sum_{r=-\infty}^{+\infty} f(L(kM - r) + (L - 1) * M) * x(r) = \sum_{r=-\infty}^{+\infty} f_{(L-1)M}(kM - r) * x(r)$$

The polyphase components fi comprise non-overlapping subsets of the filter coefficients, enabling parallelisation of the L filter phases, whenever M and L do not have any common factors, e.g. for L=4 and M=5.

Additionally, the recovered digital signal (30) is further equalised according to an additional equalisation scheme (113), e.g. a feed-forward equaliser, FFE, a decision-feedback equaliser, DFE, a maximum likelihood sequence estimator, MLSE, or a combination of equalisation techniques, to further reduce ISI. The additional equaliser (113) may advantageously comprise a high number of filter coefficients to increase the removal of ISI. For example, a FFE may be applied with 32 coefficients in combination with a DFE with 2 coefficients.

The determining of the phase error (107) comprises applying a low-pass filtering operation (114) on the phase error (8) to ease further processing of the phase error (8). After iteratively performing the method (100) for a while, a steady-state may be reached, wherein a steady-state frequency error, i.e. a frequency offset (9), and a steady-state phase error are reached. Therefore, the low-pass filter of the circuitry (100) may also comprise integrator terms to enable removing the remaining steady-state frequency error (9) and the steady-state phase error.

Further, the circuitry (100) comprises a sub-circuitry, configured for calculating (115) a frequency correction (9) based on the phase error (8) and applying (116) the frequency correction (9) to the sampling rate $F_{sample}$ to compensate for frequency deviations from the symbol frequency $F_{symbol}$. Such a frequency offset $F_{offset}$ (9) can, for example, be identified from the phase error (8) as a recurring delay in subsequent periods. When a frequency offset (9) is present, the ADC is sampling at a frequency $F_{sample}$ equal to $(M/L)*F_{symbol} + F_{offset}$. A frequency correction $F_{correction}$ can be derived and provided to the ADC by amending the sampling rate of $F_{sample}$ accordingly, e.g. to $F_{sample} - F_{correction}$. As such, when $F_{correction}$ equals $F_{ottset}$, the average sample frequency $F_{sample}$ becomes equal to $(M/L)*F_{symbol}$ with a corresponding period of $(L/M)*T_{symbol}$.

Further, the digital signal (20) is demultiplexed (117) into N parallel digital signals, before the up-sampling (103), wherein subsequent steps may be performed in parallel. N may, for example, equal 128 or 192.

Still referring to Fig. 9, the circuitry (100) further comprises a buffer for buffering (118) the digital signal (20) through an elastic buffering scheme. In accordance with the buffering (118), the method (100) may further comprise shifting the digital signal (20) in the buffering scheme when the phase error (8) exceeds a sampling period associated with the sampling rate $F_{sample}$, $T_{symbol} * \dfrac{L}{M}$, to further compensate for the phase error. When the demultiplexer (117) and the buffer (118) are used in combination with the adaptive filter (110) as illustrated in Fig. 9, the adaptive filtering loop (6) comprises taking the digital signal (20) after multiplexing and buffering, instead of the digital signal (20).

The three ways of compensating the phase error (8) may be combined. A first way comprises interpolating (108) the intermediate filter coefficients (40) based on the phase error (8), resulting in interpolated filter coefficients (50), and updating the filter coefficients of the FIR filter with the interpolated filter coefficients (50). A second way comprises shifting (112) the intermediate filter coefficients (40) when the phase error (8) in absolute value is at least half an equivalent time (70), e.g. an equivalent time, between the intermediate filter coefficients (40). A third way comprises shifting the digital signal (20) in the buffer when the phase error (8) exceeds a sampling period associated with the sampling rate $F_{sample}$. For example, if L equals 3, M equals 5 and the phase error equals $T_{symbol} * \dfrac{9}{10}$, the digital signal may first be shifted by one sample in the buffering scheme, i.e. compensating for a phase error of $T_{symbol} * \dfrac{3}{5}$, resulting in a remaining phase error of $T_{symbol} * \dfrac{3}{10}$. Next, the intermediate filter coefficients may be shifted by the equivalent time (70), i.e. compensating for a phase error of $T_{symbol} * \dfrac{1}{5}$, resulting in a remaining phase error of $T_{symbol} * \dfrac{1}{10}$. Lastly, the remaining phase error may be compensated for by an appropriate interpolation of the intermediate filter coefficients, for example an interpolation using a factor $T_{symbol} * \dfrac{1}{10}$.

The abovementioned steps, and circuitry components corresponding therewith, of the example embodiment of Fig. 9 are independent from each other and may each be separately added to the CDR circuitry (100) of Fig. 1. Any combinations of these additional features are possible. This concerns the step of calculating (110) the intermediate filter coefficients (40) according to an adaptive filter algorithm (110), the filter being a polyphase filter (90), the step of applying (113) an additional equalisation scheme (113), the step of applying (114) a low-pass filtering operation, the step of applying (116) a frequency correction (9), the step of demultiplexing (117) and the step of buffering (118).

As used in this application, the term "circuitry" may refer to one or more or all of the following:

(a) hardware-only circuit implementations such as implementations in only analogue and/or digital circuitry and

(b) combinations of hardware circuits and software, such as (as applicable):

(i) a combination of analogue and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method (100) for performing clock and data recovery, CDR,
   the method (100) comprising the steps of:

   - obtaining (101) an analogue communication signal (10) **characterized by** a symbol frequency $F_{symbol}$;
   - performing (102) an analogue-to-digital conversion of the analogue communication signal (10) according to a sampling rate $F_{sample}$ targeting $F_{symbol}$ *(M/L) thereby obtaining a digital signal (20), wherein M and L are natural numbers larger than zero;
   - up-sampling (103) the digital signal (20) by L;
   - filtering (104) the up-sampled digital signal with filter coefficients of a finite impulse response, FIR, filter to perform a fractionally-spaced equalisation;
   - down-sampling (105) the filtered digital signal by M resulting in a recovered digital signal (30);
   - obtaining (106) intermediate filter coefficients (40) for the FIR filter;
   - determining (107) a phase error (8) based on the recovered digital signal (30);
   - interpolating (108) the intermediate filter coefficients based on the phase error (8) to compensate for the phase error (8), resulting in interpolated filter coefficients (50); and
   - updating (109) the filter coefficients of the FIR filter with the interpolated filter coefficients (50).

2. The method (100) according to claim 1, wherein the obtaining (106) of the intermediate filter coefficients (40) comprises calculating (110) the intermediate filter coefficients (40) according to an adaptive filter algorithm based on the digital signal (20) and the recovered digital signal (30).

3. The method (100) according to claim 1 or 2, wherein the intermediate filter coefficients (40) characterize an underlying filter impulse response (60), and wherein the interpolating (108) comprises shifting (111) the underlying filter impulse response (60) based on the phase error (8).

4. The method (100) according to any one of the preceding claims, further comprising shifting (112) the intermediate filter coefficients (40) when the phase error (8) is at least half of an equivalent time (70) between the intermediate filter coefficients (40) in absolute value, to further compensate for the phase error (8).

5. The method (100) according to any one of the preceding claims, wherein the FIR filter is a polyphase FIR filter (90) with L phases.

6. The method (100) according to any one of the preceding claims, further comprising equalising (113) the recovered digital signal (30) according to an additional equalisation scheme.

7. The method (100) according to any one of the preceding claims, wherein the determining (107) of the phase error (8) comprises applying (114) a low-pass filtering operation on the phase error (8).

8. The method (100) according to any one of the preceding claims, further comprising calculating (115) a frequency correction (9) based on the phase error (8) and applying (116) the frequency correction (9) to the sampling rate $F_{sample}$ thereby compensating for frequency deviations from the symbol frequency $F_{symbol}$.

9. The method (100) according to any one of the preceding claims, further comprising, before the up-sampling, demultiplexing (117) the digital signal (20) as N parallel digital signals, and performing subsequent steps in parallel.

10. The method (100) according to any one of the preceding claims, further comprising buffering (118) the digital signal through an elastic buffering scheme, and further comprising shifting the digital signal in the buffering scheme when the phase error (8) exceeds a sampling period associated with the sampling rate $F_{sample}$, to further compensate for the phase error (8).

11. A circuitry (100) for clock and data recovery, CDR, the circuitry (100) comprising:

   - an analogue-to-digital converter, ADC, configured to perform (102) an analogue-to-digital conversion of an analogue communication signal (10) according to a sampling rate $F_{sample}$ targeting $F_{symbol}$ *(M/L) thereby obtaining a digital signal (20), wherein M and L are natural numbers larger than zero;
   - an up-sampler, configured to up-sample (103) the digital signal (20) by L;
   - a filter, configured to filter (104) the up-sampled digital signal with filter coefficients of a finite impulse response, FIR, filter to perform a fractionally-spaced equalisation;
   - a down-sampler, configured to down-sample (105) the filtered digital signal by M resulting in a recovered digital signal (30);
   - a sub-circuitry configured to obtain (106) intermediate filter coefficients (40) for the FIR filter;
   - a phase error calculation circuitry configured to determine (107) a phase error (8) based on the recovered digital signal (30); and
   - an interpolator configured to interpolate (108) the intermediate filter coefficients based on the phase error (8) to compensate for the phase error (8), resulting in interpolated filter coefficients (50), and configured to update (109) the filter coefficients of the FIR filter with the interpolated filter coefficients (50).

Fig. 1

EP 4 507 244 A1

Fig. 2

Fig. 3

Fig. 4

EP 4 507 244 A1

Fig. 5

Fig. 6

Fig. 7

Fig. 8

EP 4 507 244 A1

Fig. 9

Europäisches
Patentamt

European
Patent Office

Office européen
des brevets

# EUROPEAN SEARCH REPORT

**Application Number**

**EP 23 19 1118**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEN XI ET AL: "Digital Timing Recovery for Fractional Oversampling Coherent Optical Receivers", 2021 4TH INTERNATIONAL CONFERENCE ON INFORMATION COMMUNICATION AND SIGNAL PROCESSING (ICICSP), IEEE, 24 September 2021 (2021-09-24), pages 315-321, XP034029913, DOI: 10.1109/ICICSP54369.2021.9611844 [retrieved on 2021-11-10] * sections III and IV; figures 1,4,7,8 * | 1-11 | INV. H04L7/00 |
| X | US 7 738 613 B1 (ANDERSEN JACK B [US] ET AL) 15 June 2010 (2010-06-15) * column 2, line 22 - column 3, line 4 * * column 5, line 33 - column 7, line 7; figures 2,3 * * column 8, line 38 - column 9, line 31; figure 4 * | 1-11 | |
| A | US 2012/140811 A1 (SHIBASAKI TAKAYUKI [JP]) 7 June 2012 (2012-06-07) * paragraph [0008] * * paragraph [0028] - paragraph [0031]; figures 1,2,3 * | 1-11 | TECHNICAL FIELDS SEARCHED (IPC) H04L |

The present search report has been drawn up for all claims

| Place of search | Date of completion of the search | Examiner |
|---|---|---|
| The Hague | 19 January 2024 | Roldán Andrade, J |

EPO FORM 1503 03.82 (P04C01)

## ANNEX TO THE EUROPEAN SEARCH REPORT
## ON EUROPEAN PATENT APPLICATION NO.

**EP 23 19 1118**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-01-2024**

| Patent document cited in search report | | Publication date | Patent family member(s) | | Publication date |
|---|---|---|---|---|---|
| US 7738613 | B1 | 15-06-2010 | NONE | | |
| US 2012140811 | A1 | 07-06-2012 | JP | 5510297 B2 | 04-06-2014 |
| | | | JP | 2012124593 A | 28-06-2012 |
| | | | US | 2012140811 A1 | 07-06-2012 |

EPO FORM P0459

For more details about this annex : see Official Journal of the European Patent Office, No. 12/82